# FASCICULE DE BREVET EUROPEEN

(11) **EP 2 340 388 B1**
(45) Date de publication et mention de la délivrance du brevet: **05.03.2014**
(21) Numéro de dépôt: 09760188.4
(22) Date de dépôt: 22.10.2009
(51) Int. Cl.: F16L 39/00, F16L 59/14, F16L 59/16

(54) **ENSEMBLE DE CONDUITES COAXIALES COMPRENANT UN MANCHON D'ISOLATION THERMIQUE**
SATZ VON KOAXIALEN ROHREN MIT WÄRMEISOLIERUNGSMUFFEN
COAXIALLY PIPES ASSEMBLY COMPRISING A THERMAL INSULATING SLEEVE

(30) Priorité: 29.10.2008 FR 0857361
(43) Date de publication de la demande: 06.07.2011
(73) Titulaire: Saipem SA, 78180 Montigny-le-Bretonneux (FR)
(72) Inventeur: PIONETTI, François-Régis, F-50450 La Baleine (FR); DELEBECQUE, Loïc, 78114 Magny les Hameaux (FR)
(74) Mandataire: Domange, Maxime
(86) Numéro de dépôt international: PCT/FR2009/052017
(87) Numéro de publication internationale: WO 2010/049627

(56) Documents cités:
- WO-A1-02/16733
- WO-A2-2008/053251
- FR-A1- 2 888 309
- GB-A- 2 394 017

## Description

La présente invention concerne un ensemble de conduites coaxiales comprenant un manchon d'isolation thermique, plus particulièrement un manchon d'isolation de la zone de raccordement de deux rames de conduites coaxiales, notamment des conduites sous-marines véhiculant des fluides chauds ou froids, de préférence des conduites sous-marines destinées aux grandes profondeurs.

Dans la majorité des domaines industriels on recherche des systèmes d'isolation performants pour maintenir les fluides véhiculés dans les tuyauteries à température constante, de manière à ce que les transferts entre équipements puissent être rendus possibles sur des distances importantes, atteignant par exemple plusieurs centaines de mètres, voire plusieurs kilomètres. De telles distances sont courantes dans les industries telles que les raffineries de pétrole, les installations de gaz naturel liquéfié (-165°C), les champs pétroliers sous-marins lesquels s'étendent sur plusieurs dizaines de kilomètres. De tels champs pétroliers sont développés par des profondeurs d'eau de plus en plus importantes lesquelles peuvent dépasser 3000 m.

La présente invention concerne en particulier des éléments de conduites coaxiales destinées à la fabrication de conduites sous-marines installées sur les champs pétroliers par très grandes profondeurs, notamment les conduites de liaison fond-surface en suspension entre le fond de la mer et un navire de surface ancré sur ledit champ pétrolier.

Ces conduites coaxiales sont appelées "Pipe In Pipe" ou PiP, c'est à dire "conduite dans une conduite", dans laquelle une conduite interne véhicule le fluide et une conduite externe coaxiale à la précédente, appelée aussi "enveloppe externe", est en contact avec le milieu ambiant, c'est-à-dire l'eau. L'espace annulaire entre les deux conduites peut être rempli d'un matériau isolant ou encore être vidé de tout gaz.

Ces systèmes ont été développés pour atteindre un haut niveau de performance thermique et des versions spécifiques ont été développées pour répondre de manière plus adaptée aux grands fonds, c'est à dire pour résister à la pression du fond de la mer. En effet, la pression de l'eau étant sensiblement de 0.1 MPa, soit environ 1 bar pour 10m de profondeur, la pression à laquelle doit résister la conduite est alors d'environ 10 MPa, soit environ 100 bars pour 1000m de profondeur et d'environ 30 MPa, soit environ 300 bars pour 3000m.

Ces ensembles de conduites coaxiales sont fabriqués par assemblage bout à bout par soudage de longueurs unitaires dénommées ci-après "éléments unitaires de conduites coaxiales" ou par assemblage de "rames de conduites coaxiales", chaque rame étant constituée elle-même d'une pluralité d'éléments unitaires de conduites, dont la longueur est en général de 10 à 100 mètres, plus particulièrement d'environ 12, 24 ou 48 mètres chacun(e).

Dans le cadre de l'installation de conduites sous-marines par grande profondeur, ces éléments de longueur unitaire ou ces rames sont fabriqués à terre. Puis, ils sont transportés en mer sur un navire de pose. Lors de la pose, les éléments unitaires ou rames d'ensemble de conduites coaxiales sont raccordés les uns aux autres à bord du navire et au fur et à mesure de leur pose en mer. Il est donc important que ce raccordement puisse être intégré dans le procédé de montage et d'assemblage de la conduite et de pose de celle-ci au fond de la mer.

Pour ce faire, on utilise en général des pièces de jonction ou pièces de raccordement forgées en acier, assemblées aux extrémités desdits éléments d'ensemble de conduites coaxiales à assembler. La pièce de jonction à l'extrémité aval d'un premier élément d'ensemble de conduites coaxiales non encore assemblé, étant raccordée par soudage à la pièce de jonction à l'extrémité libre amont d'un deuxième élément d'ensemble de conduites coaxiales déjà assemblé en aval.

Ces pièces de jonction forgées visent également à renforcer la résistance des conduites soumises à des flexions importantes au cours de la pose, notamment dans la zone de raccordement de deux dites longueurs unitaires successives, et plus particulièrement, dans le cas de liaisons fond-surface, à leur conférer une très grande résistance à la fatigue durant toute la durée de vie des installations.

Plus particulièrement, lesdites pièces de jonction forgées comprennent deux branches de révolution dont une branche externe et une branche interne formant une fourche délimitant ledit espace annulaire, fourche dont les extrémités cylindriques libres sont assemblées directement aux extrémités cylindriques respectivement des conduites, externes et internes. Des conduites coaxiales et pièces de jonction de ce type ont été décrites notamment dans FR 2 873 427 et dans GB 2 161 565.

Dans FR 2 786 713 et FR 2 897 919, on a décrit un autre mode de réalisation dans lequel on n'utilise pas de pièce de jonction pour assurer la fermeture de l'espace annulaire entre les conduites interne et externe à leurs extrémités, mais on fait dépasser les extrémités de la conduite interne par rapport à celles de la conduite externe et par déformation d'une partie terminale de la conduite externe autour de la partie terminale de la conduite interne en restriction de son diamètre jusqu'à les rapprocher l'une de l'autre pour fermer l'espace annulaire notamment par soudage des extrémités des conduites externe et interne entre elles. Ce type de fermeture de l'espace annulaire et jonction des extrémités des conduites coaxiales est appelé « croquage ». Il est avantageux car il permet à une machine de soudage d'avoir accès aux extrémités des conduites internes de deux éléments de conduites coaxiales successifs à assembler pour les souder bout à bout sans être gêné par les conduites externes associées. L'espace entre les extrémités de 2 conduites externes de 2 éléments de conduites coaxiales assemblés bout à bout est en général recouvert par un manchon tubulaire apportant isolation et renfort mécanique au niveau de la jonction, notamment un manchon coulissant par dessus la conduite externe.

Le but de la présente invention est donc de fournir des conduites coaxiales de type PiP, les rames ou éléments unitaires de conduite présentent sur toute leur longueur, sauf aux extrémités, un niveau d'isolation extrême du fait de la présence d'un matériau isolant dans l'espace annulaire entre leurs conduites interne et externe, de préférence associé à un tirage au vide poussé pour limiter les phénomènes de transmission de chaleur par convection. En revanche, au niveau des extrémités desdites rames, la liaison métallique massive entre conduite externe et conduite interne, que ce soit par le biais d'une dite pièce de jonction ou par croquage, supprime toute isolation thermique entre le milieu ambiant, en général de l'eau à 3-5°C à très grande profondeur, et le pétrole à véhiculer, en général à une température de 40-45°C à 80-100°C, voire plus. Il s'ensuit alors au niveau de cette zone de jonction par soudage des deux dites pièces de jonction ou des éléments unitaires de conduites coaxiales « croquées » un transfert thermique particulièrement important, donc une perte de chaleur du pétrole transporté, ce qui risque de provoquer des bouchons de paraffine ou le formation d'hydrates de gaz, si la température vient à baisser en dessous de 30-35°C en un point quelconque de la liaison fond-surface. Ainsi, on cherche à restituer localement au niveau de chacune des jonctions entre rames, un niveau d'isolation suffisant pour que le cheminement du pétrole entre les têtes de puits et la surface se fasse avec un minimum de perte de chaleur.

Ce problème de pont thermique est encore plus critique lors des arrêts de production car la colonne de pétrole brut est alors arrêtée et, si en longueur courante de rame la perte de chaleur reste faible, grâce au niveau d'isolation extrême du au principe de PiP, il n'en va pas de même au droit des raccordements entre rames en raison du pont thermique ainsi créé. En effet, une rame de PiP de longueur unitaire 48m présentant un niveau d'isolation en longueur courante inférieur à 1 W/m²/K, a sa valeur moyenne dégradée de 10-12% du fait du pont thermique existant à chacune des extrémités, lorsque lesdites extrémités ne sont pas isolées. Si la longueur unitaire est moitié, c'est à dire 24m, la dégradation due aux extrémités non isolées est doublée, c'est-à-dire 20-25%. De même pour des rames de longueur 12m, la dégradation atteint alors 40/50%, ce qui rend alors la technologie PiP peu intéressante en raison de la complexité et le coût important de sa fabrication.

On entend ici par « valeur moyenne dégradée » la perte thermique globale de la longueur d'une rame, incluant les pièces de jonction ou zone croquée d'extrémité à chacune de ses deux extrémités, divisée par la longueur de ladite rame.

On connaît des moyens d'isolation des conduites externes résistant à des pressions hydrostatique élevées et donc aptes à être utilisées à des profondeurs d'immersion élevées, constituées par :
- des revêtements matériaux polymères massives quasi incompressibles à base de polyuréthane, polyéthylène, polypropylène etc. qui se présentent le cas échéant sous forme de manchon tubulaire massif. Mais ces matériaux présentent une conductivité thermique et des propriétés d'isolation thermiques assez moyennes, insuffisantes pour éviter les inconvénients en cas d'arrêt de production pour les conduites sous-marines véhiculant des hydrocarbures, ou
- Des revêtements en matériaux synthétiques constitués de billes creuses contenant un gaz et résistantes à la pression extérieure, noyées dans des liants tels que du béton, une résine époxy etc... dont les propriétés d'isolation thermique sont supérieures, mais qui sont nettement plus coûteuses et plus difficiles à installer. On a recours en effet à des demi-coquilles que l'on assemble autour de la soudure d'assemblage à protéger et après réalisation de celle-ci.

Par ailleurs, on connaît des matériaux isolants à propriété d'isolation thermique supérieure, c'est-à-dire à plus faible conductivité thermique, doublée dans certains cas de propriétés de changement de phases, en particulier sous forme de gel.

Des matériaux de ce type ont été décrits notamment dans les brevets FR 2 800 915, FR 2 820 426, FR 2 820 752, WO 2004/003424 et WO 00/40886. Toutefois, ces gels isolants de par leur tenue mécanique insuffisante et du fait qu'ils sont obtenus à partir de réactions physiques et chimiques, physico-chimiques entre différents composants, sont injectés sous forme liquide juste après mélange des différents composants, et insérés ou injectés entre lesdites conduites externe et interne de l'ensemble de conduites coaxiales de type Pipe-in-Pipe.

La tenue mécanique de ces gels est insuffisante pour résister seule aux contraintes mécaniques des conduites reposant sur le fond marin et ils ne sont pas mis en oeuvre à l'extérieur des conduites externes de l'ensemble de conduites Pipe-in-Pipe. C'est pourquoi, ils ne sont pas adaptés pour réaliser l'isolation des zones de jonction de deux sections de conduite PiP assemblées bout à bout par soudage, le cas échéant par l'intermédiaire de pièces de jonction de révolution.

Le document WO 2008/053251 décrit différents moyens d'isolation un manchon d'isolation thermique de la zone de jonction entre les deux éléments unitaires de conduite, ledit manchon d'isolation thermique étant constitué par des conduites PiP en acier réunies à leurs extrémités longitudinales par croquage et dont l'espace annulaire contient un matériau d'isolation thermique.

Dans WO 2008/053251, sur les figures 3 et 4, le volume interne entre les deux parois du manchon est partiellement rempli d'un matériau isolant (voir page 13, lignes 14 à 22) et partiellement rempli de gaz tel que de l'air.

Dans ce document, page 13 ligne 20, il est indiqué que la structure Pipe in Pipe en acier assurant l'isolation de la zone de jonction est coûteuse et lourde. C'est pourquoi dans ce document, il est proposé une amélioration avec un système d'isolation décrit dans la figure 5 en remplaçant le manchon par une enveloppe plus légère avec un unique élément de conduite en acier (voir page 18, lignes 26 et suivantes), lequel est recouvert d'une isolation multicouches (voir page 19, lignes 5 et suivantes) en mousse de polypropylène expansé ou en mousse syntactique de polyuréthane. Mais, un tel manchon en acier est contre-performant en termes d'isolation thermique compte tenu de la conductivité thermique élevée de l'acier.

Dans le document D2 WO/02/16763 décrit un manchon tubulaire creux entourant une conduite et renfermant en son sein un matériau isolant à changement de phase (PCM).

Le but de la présente invention est donc de fournir des dispositifs d'isolation thermique améliorés au niveau des jonctions par soudage d'éléments de conduites unitaires coaxiales raccordées bout à bout.

Pour ce faire la présente invention fournit un ensemble de deux conduites coaxiales de type PiP, comprenant au moins deux éléments unitaires de conduites coaxiales comprenant chacun une conduite interne et une conduite externe avec un espace annulaire, de préférence rempli d'un matériau isolant, assemblés bout à bout par soudage, caractérisé en ce qu'il comprend un manchon à paroi tubulaire creuse en matériau rigide ou semi-rigide, en matière plastique ou matériau composite, entourant ladite conduite au regard de la zone de jonction par soudage des deux dits éléments unitaires de conduites coaxiales, ladite paroi tubulaire creuse du manchon comprenant une enveloppe externe et une enveloppe interne reliées à leurs extrémités longitudinales de façon étanche, définissant ainsi un volume interne rempli d'un matériau isolant thermique quasi-incompressible.

Cette paroi tubulaire creuse dudit manchon d'isolation est particulièrement avantageuse, car elle permet de mettre en oeuvre des produits isolants, qui autrement n'auraient pas une tenue suffisante pour résister seuls aux contraintes mécaniques des conduites reposant sur le fond marin, présentant des propriétés d'isolation thermique élevées. En particulier, cette paroi tubulaire creuse permet d'y conditionner des gels isolants thermiques, qui présentent l'avantage d'empêcher les phénomènes de convexion au sein de la masse isolante d'une part, et d'autre part, d'être obtenus à partir de réactions physiques, chimiques, ou physico-chimiques entre différents composants, ce qui permet de l'injecter sous forme liquide juste après mélange des différents composants, le remplissage intégral de la paroi tubulaire creuse pouvant être effectué avant que la gélification en masse ne commence de manière significative.

Du fait que le matériau isolant est quasi-compressible, c'est-à-dire entre autres, qu'il ne contient pas de gaz, le matériau rigide ou semi-rigide de la paroi tubulaire creuse du manchon, soumis à la pression hydrostatique à grande profondeur, est supporté par ledit matériau isolant, de sorte que ledit matériau rigide ou semi-rigide de la paroi tubulaire du manchon ne requiert pas une résistance mécanique aussi élevée que celle d'une conduite en acier.

Le manchon d'isolation selon l'invention ne comporte aucun élément en acier, mais sa rigidité d'ensemble du fait dudit matériau isolant quasi incompressible, est suffisante pour garder une forme cylindrique stable lors des manutentions et lors de son installation finale sur la conduite à isoler. On entend ici par « semi-rigide » un matériau suffisamment rigide pour se maintenir en forme en dépit du poids du matériau isolant contenu dans le manchon, mais présentant néanmoins une certaine souplesse pour accepter des déformations notamment pour suivre des déformations résultant du changement de volume du matériau lors de son éventuel changement de phase. Par « paroi tubulaire », on entend que lesdites enveloppes externe et interne peuvent présenter une section dans la direction transversale perpendiculaire à l'axe longitudinal XX' dudit manchon de forme circulaire ou ovale ou encore polygonale.

Les formes ovales ou polygonales sont particulièrement appropriées dans le cas où le matériau isolant quasi compressible est un matériau à changement de phase de sorte que les parois peuvent ainsi se déformer pour supporter l'augmentation de volume lors du changement de phase du matériau le cas échéant, comme décrit dans WO 2004/003424.

Cette paroi tubulaire creuse est également particulièrement intéressante, en ce qu'elle empêche la migration longitudinale éventuelle dudit matériau isolant quasi compressible qu'elle confine.

On comprend que ledit matériau isolant incompressible présente une conductivité thermique inférieure à celle du matériau constitutif desdites enveloppes interne et externe de la paroi tubulaire creuse dudit manchon.

L'installation de manchons d'isolation à chacun des raccordements apporte un gain significatif à l'isolation moyenne d'une rame, et les valeurs moyennes dégradées précédemment définies sont alors respectivement de l'ordre de 7-8% pour une rame de 48m, de 14-18% pour une rame de 24m et de 28-36% pour une rame de 12m.

Par contre, en cas d'arrêt de production, les performances seront les mêmes pour chacune des longueurs unitaires de rame, car alors le phénomène de refroidissement est principalement localisé au niveau des ponts thermiques, c'est à dire au niveau de chacun des raccordements entre rames, respectivement tous les 48-50m, tous les 24-25m, ou tous les 12m.

De préférence, ledit matériau isolant thermique quasi incompressible est un gel isolant à changement de phase (PCM).

De préférence, le gel isolant comprend un premier composé présentant des propriétés d'isolation thermique, tels que des alcanes, comprenant une chaîne hydrocarbonée d'au moins six atomes de carbone, de préférence au moins dix atomes de carbone, en mélange avec un second composé consistant en un composé polymère gélifiant ou à effet structurant, notamment par réticulation tel, qu'un composé de type polyuréthane, polypropylène, polyéthylène ou silicone, ledit premier composé se présentant de préférence sous forme de particules ou microcapsules dispersées au sein d'une matrice dudit second composé gélifié ou réticulé, ladite matrice confinant ainsi ledit premier composé isolant.

Ces gels isolants présentent l'intérêt de pouvoir être mis en oeuvre à l'état liquide et se transformer après quelques heures en gel, dans lequel le composé isolant se trouve microencapsulé dans une matrice du deuxième composé jouant en quelque sorte le rôle d'éponge apte à confiner le matériau isolant et le maintenir dans une forme d'épaisseur sensiblement constante, réduisant ainsi radicalement les phénomènes de convexion, et le cas échéant absorber les variations de volume si le matériau isolant est un matériau à changement de phase.

Plus particulièrement, ledit premier composé présentant des propriétés d'isolation thermique peut être un matériau isolant à changement de phase, notamment des alcanes ou alcools présentant une chaîne hydrocarbonée d'au moins quatorze atomes de carbone, tels que les paraffines, cires, bitume, goudron, alcools gras ou encore glycols. Dans ce cas, le deuxième composé gélifiant peut absorber une part importante des variations de volume du premier composé lors des changements de phases.

Ces matériaux isolants à changement de phase sont avantageux, car ils se comportent comme des accumulateurs de chaleur capables de restituer leur énergie dans leur phase de solidification et inversement capables d'absorber cette énergie en cours de fusion. Lorsqu'ils restituent l'énergie accumulée, ces matériaux permettent donc d'augmenter la durée des arrêts de production sans risque de colmatage de conduite par refroidissement prématuré de leur contenu.

Le matériau à changement de phase présente avantageusement une température de fusion liquide/solide t₀ comprise entre 20 et 80°C, supérieure à la température t₁ à partir de laquelle le fluide circulant à l'intérieur de la conduite présente une augmentation de viscosité dommageable pour sa circulation dans la conduite et inférieure à la température t₂ du fluide en circulation dans la conduite en opération.

Plus particulièrement le matériau isolant à changement de phase comprend des composés chimiques de la famille des alcanes, de préférence une longue chaîne hydrocarbonée d'au moins 14 atomes de carbone, telle que la paraffine. Plus particulièrement encore, il s'agit de l'Heptacosane de formule C₁₇H₃₆ présentant une température de fusion d'environ 50°C.

Il s'agit de composés qui allient les propriétés d'isolation thermique et de conserver une température de changement de phase pendant toute la durée de leur changement de phase retardant ainsi le refroidissement de l'espace interne du manchon, à savoir du pétrole véhiculé par la conduite PiP, notamment en cas d'arrêt de production.

Dans un mode de réalisation particulier, ledit gel isolant est un mélange de kérosène et polyuréthane.

Le kérosène est constitué majoritairement d'un alcane présentant une chaîne carbonée d'au moins dix atomes de carbone et ne présentant pas de propriétés de changement de phase.

Des gels isolants de ce type présentent les caractéristiques physicochimiques suivantes :
- ils sont constitués d'un composé isolant, à changement de phase, ou non, dispersé au sein d'une matrice réticulée formant éponge à cellules creuses microscopiques et étanches,
- la réticulation de la matrice est soit de type physique, soit de type chimique, soit encore de type physico-chimique, ladite réticulation se produisant après plusieurs heures. soit à température ordinaire (10-25°C), soit par chauffage de l'ensemble,
- les gels ainsi obtenu ont une dureté shore A20 à A80 selon le type de matrice,
- leur conductivité thermique varie de 0.130 à 0.150 W/m.K.

Avantageusement, au moins ladite enveloppe interne ou de préférence au moins ladite enveloppe externe dudit manchon forme une pièce d'un seul tenant avec des éléments de liaison à ses extrémités longitudinales, aptes à fermer l'espace entre les enveloppes interne et externe de la paroi tubulaire creuse du manchon à leurs extrémités, ladite pièce étant en matière thermoplastique de faible épaisseur, inférieure à 10 mm, de préférence d'épaisseur d'environ 4 à 8 mm, obtenue par rotomoulage, tel que polyéthylène, polypropylène, polyamide ou PVDF notamment, et ladite pièce est fixée à l'autre enveloppe externe ou respectivement interne de la paroi tubulaire creuse du manchon au niveau desdits éléments de liaison.

De préférence, ladite pièce obtenue par rotomoulage comprenant une dite enveloppe interne ou de préférence externe du manchon avec lesdits éléments de liaison d'extrémité comporte au niveau de ladite enveloppe interne ou de préférence enveloppe externe du manchon des ondulations ou des rainures en bosse ou en creux arrondies ou crantées.

On comprend que ces rainures forment localement sur une distance de 1 à 10cm dans la longueur du manchon des variations de diamètre de ladite enveloppe de 0.5 à 5cm, de préférence régulièrement espacés sur toute la longueur du manchon, ce qui contribue à rigidifier la paroi tubulaire dudit manchon et compenser sa faible épaisseur résultant de son procédé d'obtention par rotomoulage.

Plus particulièrement, l'une desdites enveloppes interne ou externe dudit manchon qui vient de matière avec lesdits éléments de liaison d'extrémité est obtenu par rotomoulage, l'autre enveloppe externe ou respectivement interne du manchon étant obtenue par extrusion ou par rotomoulage, et étant fixée par collage ou soudage aux dits éléments de liaison.

Dans le cas où ladite autre enveloppe est obtenue par extrusion, elle ne présente pas de dite rainures ou ondulations, et dans le cas où elle est obtenue par rotomoulage, elle peut comprendre de telles ondulations ou rainures de rigidification.

Plus particulièrement encore, ladite paroi tubulaire creuse comprenant lesdites enveloppes interne et externe et dits éléments de liaison d'extrémité, est obtenue d'un seul tenant sous forme de pièce monobloc par rotomoulage, l'enveloppe interne présentant de préférence une forme légèrement conique et dépourvue de dites ondulations ou rainures, de façon à permettre son démoulage.

Dans un mode de réalisation avantageux, ladite enveloppe interne de ladite paroi tubulaire creuse du manchon comporte une zone médiane de plus grand diamètre que les zones d'extrémité qui lui sont adjacentes de part et d'autre, formant ainsi un creux dans lequel est logée au moins une première poche étanche entourant ledit ensemble de conduites coaxiales sur toute sa périphérie, remplie d'un matériau à changement de phases non isolant, de préférence un sel fondu, l'épaisseur de ladite poche ainsi remplie étant de préférence inférieure à l'épaisseur dudit creux, de préférence encore de 1 à 10 cm.

Le creux dans ladite enveloppe interne permet de maintenir ladite poche en place en évitant tout déplacement longitudinal, et en conservant de part et d'autre de ladite poche une épaisseur maximale dudit manchon.

Le matériau à changement de phase présente avantageusement une température de fusion liquide/solide t₀ comprise entre 20 et 80°C, supérieure à la température t₁ à partir de laquelle le fluide circulant à l'intérieur de la conduite présente une augmentation de viscosité dommageable pour sa circulation dans la conduite et inférieure à la température t₂ du fluide en circulation dans la conduite en opération.

Lesdites poches sont placées à proximité de l'ensemble de conduites coaxiales, et de préférence ne sont pas directement en contact avec celui-ci. Cet espace entre le matériau PCM et les conduites permet de réduire la vitesse d'absorption de calories du pétrole en phase de redémarrage de la production après un arrêt afin que le pétrole reste en température le plus longtemps possible et n'atteigne la valeur t₀ que lorsqu'il est suffisamment proche de la surface pour atteindre celle-ci sans que la température ne chute au dessous de la température t₁ à laquelle certains de ses composants se figent, empêchant ainsi sa circulation au sein de la conduite.

Dans la mesure où le manchon contient un matériau isolant quasi incompressible, le matériau PCM inclus dans ladite poche interne n'est pas nécessairement un matériau d'une faible conductivité thermique. Dans le cas de matériau PCM de type sel fondu, ces derniers présentent en général une conductivité thermique élevée.

La position du matériau à changement de phases au plus proche de l'ensemble de conduites coaxiales, optimise ces propriétés localisées dans la zone où il est le plus efficace, à savoir essentiellement localisé à proximité de la conduite, car seul le matériau PCM proche de la conduite chaude peut accumuler de la chaleur lors de sa liquéfaction, le matériau PCM trop proche du milieu marin étant en général à température du fond de la mer, c'est-à-dire à 4°C et ne participerait pas au processus d'accumulation de chaleur ; il resterait toujours solide ou cristallisé, ce qui serait donc préjudiciable.

Avantageusement encore, ladite enveloppe externe de la paroi tubulaire du manchon comprend une partie médiane de plus grand diamètre que les zones d'extrémité qui lui sont adjacentes, au regard de ladite zone médiane de plus grand diamètre de ladite enveloppe interne, de façon à maintenir une épaisseur de matériau isolant quasi incompressible à l'intérieur de l'enveloppe dans ladite zone médiane, sensiblement constante sur toute la longueur dudit manchon.

On comprend que l'excroissance vers l'extérieur de la partie médiane de plus grand diamètre de l'enveloppe externe vise donc à compenser le creux de l'enveloppe interne afin de conserver une épaisseur de matériau isolant thermique contenu entre lesdites enveloppes interne et externe sensiblement constante et donc une isolation constante sur toute la longueur dudit manchon.

Avantageusement encore, ledit manchon comprend en outre un matériau de remplissage, remplissant l'espace ou le jeu entre ladite enveloppe interne de la paroi tubulaire du manchon et ladite conduite externe ou le cas échéant conduite interne de l'ensemble de conduites coaxiales, ledit matériau de remplissage assurant la liaison dudit manchon sur l'ensemble de conduites coaxiales, de préférence un matériau de remplissage durcissable du type résine ou ciment, de préférence encore un matériau isolant thermique.

Selon d'autres variantes de réalisation, le manchon peut être fixé sur lesdites conduites externes à l'aide de joints toriques d'extrémité et/ou des cales et/ou moyens de cerclage mécanique, avec ou sans dit matériau de remplissage.

Dans un mode de réalisation, chacun desdits éléments unitaires d'ensemble de conduites coaxiales assemblées comprennent à leur extrémité une pièce de jonction de révolution raccordée auxdites conduites interne et externe à une extrémité de la pièce de jonction de révolution et les deux pièces de jonction de révolution étant assemblées par soudage l'une à l'autre à leur autre extrémité, ledit manchon étant centré au droit de la soudure de jonction entre les deux pièces de jonction de révolution et s'étendant au-delà des soudures de raccordement entre lesdites pièces de jonction et chacun desdits éléments unitaires d'ensemble desdites conduites coaxiales.

Plus particulièrement, chaque dit élément unitaire de conduites coaxiales comprend à son extrémité une dite pièce de jonction, les deux dites pièces de jonction étant raccordées par soudage entre elles, et l'une desdites pièces de jonction comprenant sur sa surface externe, une protubérance en forme de butée ou collerette apte à permettre la retenue en suspension de l'élément de conduite unitaire de conduites coaxiales qui lui est raccordé lorsque celui-ci est en position verticale ou inclinée, à partir d'un navire de pose en mer, et ledit manchon tubulaire comprend une zone d'extrémité avec une enveloppe interne de diamètre supérieur à celui de l'extrémité opposée dans la direction longitudinale, ladite zone d'extrémité de l'enveloppe interne de plus grand diamètre recouvrant l'ensemble de conduites coaxiales à l'intérieur dudit manchon au moins depuis ladite protubérance ou collerette.

On comprend que la différence de diamètre entre les deux zones d'extrémité de l'enveloppe interne est supérieure à l'épaisseur de ladite protubérance ou collerette. Cette caractéristique permet d'enfiler le manchon par-dessus l'ensemble de conduites coaxiales près de la conduite externe dans la zone en amont de ladite protubérance ou collerette.

Selon une autre variante de réalisation, chaque dit élément unitaire de conduites coaxiales comprend une extrémité de conduite externe en retrait par rapport à l'extrémité de conduite interne, l'espace annulaire entre lesdites conduites externe et interne étant fermé par croquage, consistant en la déformation de la partie terminale de la conduite externe dont l'extrémité est directement raccordée à la surface de la conduite interne, de préférence par soudage, et les deux éléments unitaires de conduites coaxiales sont assemblées par soudage l'un à l'autre au niveau des extrémités de leurs conduites internes, ledit manchon s'étendant sur une distance d'au moins 50 cm de préférence au moins 1 m, au-dessus desdites conduites externes, au-delà des soudures de croquage, et l'espace entre l'enveloppe interne dudit manchon et la conduite interne de l'ensemble des conduites coaxiales entre les deux soudures de croquage est remplie d'un matériau isolant, de préférence un composé à changement de phase, de préférence encore un sel fondu contenu dans au moins une deuxième poche étanche entourant complètement ladite conduite interne, l'extrémité longitudinale desdites poches présentant de préférence en coupe longitudinale axiale un profil biseauté de manière à s'ajuster au plus près de ladite conduite externe après la zone de croquage entre ladite conduite externe et ladite enveloppe interne dudit manchon.

Avantageusement, ledit manchon renferme desdites première et/ou deuxième poches, chacune étant formée par deux poches semi-cylindriques diamétralement opposées de part et d'autre dudit ensemble de conduites coaxiales.

Ainsi, lesdites première et deuxième poches sont plus aisées à mettre en place à l'intérieur dudit manchon.

Plus particulièrement, la longueur dudit manchon est de 1 à 10 m, de préférence de 2 à 6m, de préférence de 5 à 25 cm d'épaisseur de manchon, de préférence encore lesdites enveloppes interne et externe de la paroi tubulaire du manchon présentant une épaisseur de paroi de 2 à 10 mm.

L'épaisseur de manchon s'entend de la distance entre lesdites enveloppes interne et externe et y compris les épaisseurs desdites enveloppes interne et externe.

Ainsi, le manchon s'étend sur 1 à 3 m de part et d'autre de la jonction de soudage, et donc recouvre le cas échéant lesdites pièces de jonction raccordées et une partie des éléments unitaires de conduites coaxiales assemblées auxdites pièces de jonction, ou le cas échéant, recouvre la zone entre les points de croquage entre lesdites conduites externes et conduites internes des éléments unitaires de conduites coaxiales assemblés au niveau des extrémités de leurs conduites internes, tel que décrit ci-après.

D'autres caractéristiques et avantages de la présente invention apparaîtront à la lumière de la description détaillée qui va suivre, en référence aux figures suivantes dans lesquelles :
- les figures 1A et 1B représentent un manchon d'isolation selon l'invention respectivement en vue de côté, et en vue de côté en coupe longitudinale,
- la figure 2A est une vue en perspective du processus de rotomoulage d'un manchon isolant,
- la figure 2B est une coupe en vue de côté d'un manchon isolant en cours de remplissage de composé isolant de type gel,
- la figure 3 est une coupe en vue de côté d'un manchon isolant présentant une poche interne remplie de matériau à changement de phase,
- les figures 3A et 3B sont des coupes selon le plan XX de la figure 3 détaillant deux modes de réalisation d'une dite poche interne remplie de matériau à changement de phase,
- la figure 4A est une coupe en vue de côté détaillant l'assemblage d'un tube interne à l'intérieur d'une enveloppe externe obtenue par rotomoulage pour constituer un manchon d'isolation,
- les figures 4B et 4C détaillent un mode d'assemblage par soudage à l'air chaud du tube interne à l'enveloppe externe pré-assemblés selon le mode défini sur la figure 4A,
- la figure 5A représente en coupe et en vue de côté les extrémités de deux rames de type PiP assemblées par l'intermédiaire de pièces forgées, l'ensemble étant.entouré d'un manchon d'isolation selon l'invention,
- la figure 5B représente en coupe et en vue de côté les extrémités de deux rames de type PiP assemblées par l'intermédiaire de pièces forgées, l'une d'entre elles présentant une excroissance extérieure servant d'appui lors de l'installation en mer à partir d'un navire de pose J, l'ensemble étant entouré d'un manchon isolant selon l'invention, avec une partie 35a comprenant un diamètre interne plus grand,
- la figure 6A représente en coupe et en vue de côté les extrémités de deux rames de type PiP assemblé par « croquage », entourées de deux poches en forme de demi-coquilles de matériau à changement de phase, l'ensemble étant entouré d'un manchon isolant selon l'invention,
- la figure 6B représente en coupe transversale les deux poches remplies de matériau à changement de phase,
- la figure 7 est une vue de côté d'un navire d'installation équipé d'une tour de pose en J,
- les figures 8A et 8B détaillent, en coupe et en vue de côté l'assemblage à bord du navire de la figure 7, d'une rame supplémentaire, respectivement en phase de soudage, puis en phase de remplissage annulaire après que le manchon selon l'invention ait été descendu vers sa position définitive,
- Les figures 9A et 9B représentent en coupe et en vue de côté des enveloppes externe 1a et interne 1b cylindriques à section circulaire obtenues par extrusion et assemblées à leurs extrémités longitudinales par des collerettes annulaires 1c.

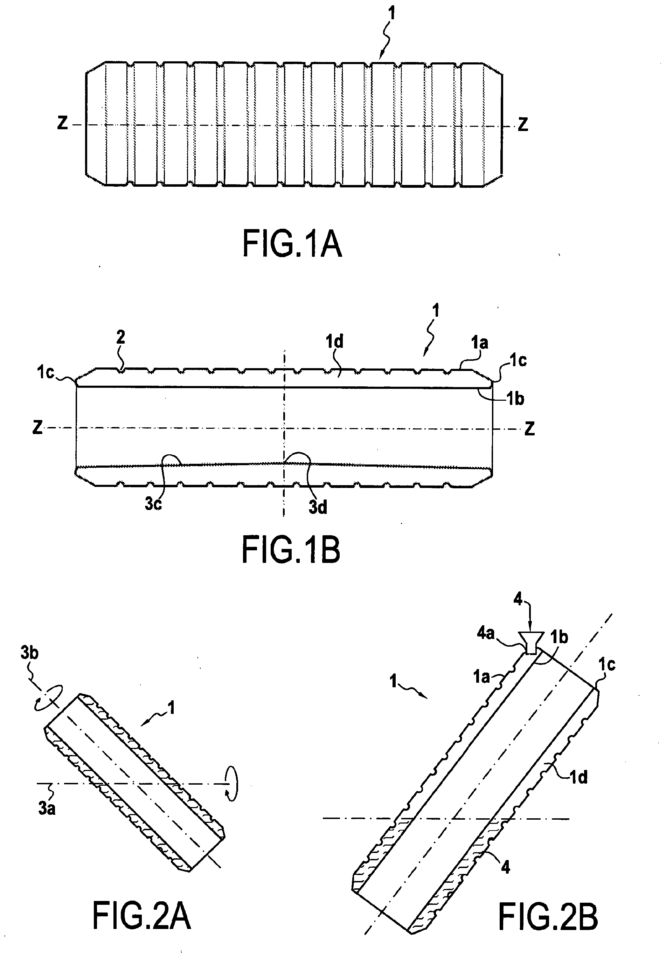

La figure 1B représente en coupe et en vue de côté un manchon d'isolation thermique 1 à paroi tubulaire creuse comprenant une double paroi constituée d'une enveloppe externe 1a et d'une enveloppe interne 1b reliées entre elles à chacune de ses extrémités 1c, l'ensemble définissant un volume étanche 1d destiné à être rempli d'un composé isolant quasi-incompressible, de préférence un gel, de préférence encore un gel à changement de phase capable de restituer des calories à la conduite de type PiP autour de laquelle ledit manchon est disposé.

Pour assurer une stabilité dimensionnelle de l'enveloppe externe lors du processus de fabrication et pendant les manipulations sur site, l'enveloppe externe présente avantageusement des ondulations 2 ou rainures crantées en creux 2a ou en bosse 2b circulaires, s'étendant transversalement à la direction longitudinale ZZ' axiale du manchon de la paroi 1a, de largeur de 1 à 5 cm dans la direction longitudinale ZZ' espacées régulièrement ou non, par exemple tous les 20-30cm.

Ledit manchon isolant est, de préférence, obtenu par rotomoulage en une seule opération. Sur la figure 2A on a représenté en perspective le principe de chemisage par roto moulage, connu de l'homme de l'art, et qui consiste à mettre en rotation dans l'espace, en général de manière pseudo aléatoire selon deux axes 3a,3b, un moule de forme, en général métallique, au sein duquel on a introduit des granules de matériau thermoplastique, tel que du polyéthylène, du polypropylène, du polyamide, ou encore du PVDF, et que l'on chauffe progressivement, par exemple dans un four, à une température où les granules atteignent leur température de fusion. Les granules fondus se collent alors à la paroi du moule et du fait que le moule est mis en rotation pseudo aléatoire selon deux axes, l'épaisseur de la paroi croît de manière sensiblement uniforme sur toute la surface interne du moule. Lorsque tous les granules sont fondus, on continue la rotation et l'on refroidit la paroi externe de la pièce de raccordement faisant office de moule, soit à l'air libre, soit en l'aspergeant d'eau. Lorsque le moule est froid, on ouvre le moule et l'on retire la pièce roto moulée, le démoulage de la partie externe s'effectuant en général sans difficultés, car le matériau thermoplastique présente un retrait de 0.5 à 2% selon le matériau. En revanche, pour faciliter le démoulage de la partie du moule en contact avec l'enveloppe interne 1b, on fabrique avantageusement ledit moule interne en deux parties gauche et droite, chacune des parties étant avantageusement profilée de manière conique 3c comme détaillé sur la figure 1B, ce qui permet d'extraire chacune desdites parties, la partie gauche vers la gauche et la partie droite vers la droite, la conicité étant avantageusement de 1 à 3%, l'enveloppe interne 1b présente donc un profil biconique avec un rétrécissement de son diamètre interne dans sa partie centrale 3d et deux parties coniques inversées symétriques de part et d'autre. Les enveloppes externe et interne 1a, 1b présentent une épaisseur de 5-6 mm.

Après démoulage, comme représenté sur la figure 2B, on remplit l'intérieur 1d dudit manchon 1 d'un composé isolant 4 quasi-incompressible à partir d'une ouverture obturable 4a. Ledit composé isolant, de préférence de type gel, est avantageusement transféré à l'état liquide jusqu'au remplissage complet dudit volume 1d, puis l'orifice de remplissage est obturé de manière définitive et parfaitement étanche. On utilise par exemple un gel polyuréthane-kérosène de la Société ARKEMA (France) qui est transféré à l'état liquide après mélangeage des composants et qui réticule à froid en quelques heures.

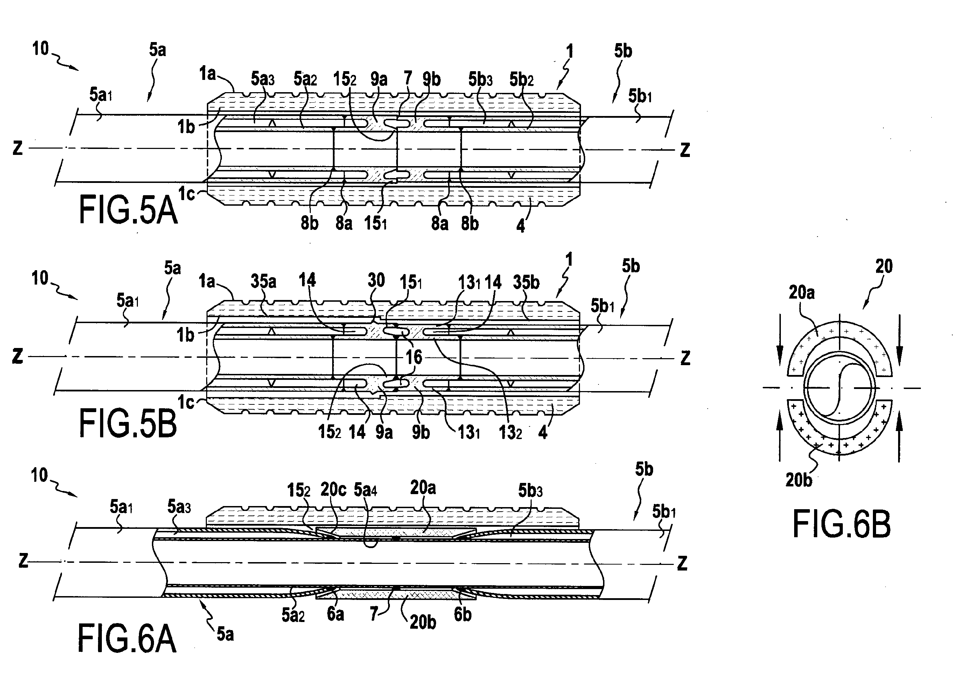

Le manchon d'isolation 1 est destiné à isoler la zone de raccordement de deux rames de conduites de type PiP 5a-5b, telles qu'illustrées sur les figures 5A, 5B, 6A et 8B.

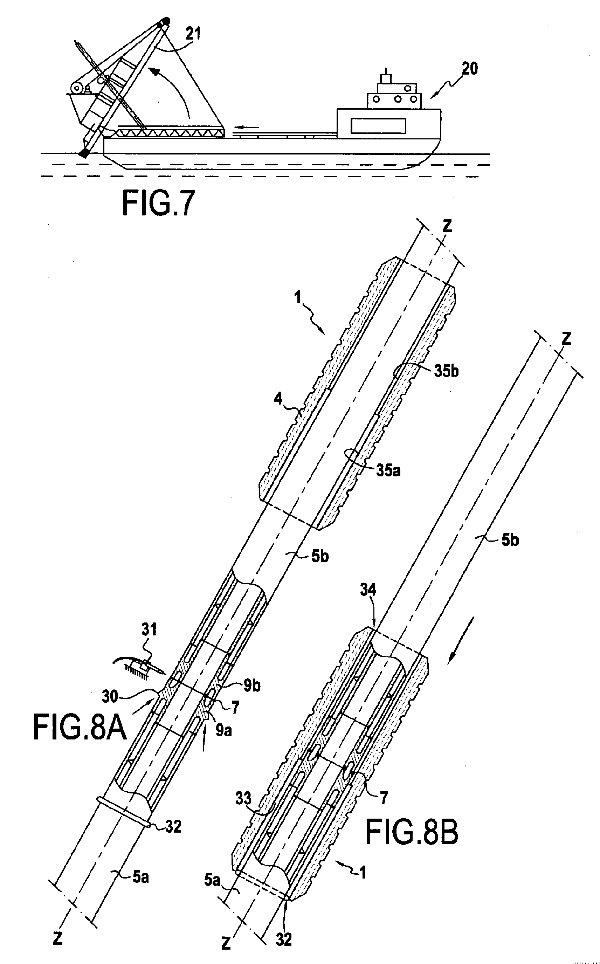

Sur la figure 5A on a représenté en coupe et en vue de côté l'assemblage de deux rames au niveau de deux pièces de jonction forgées de révolution 9a, 9b telles que décrites dans FR 2 873 427. Chacune des rames est constituée d'une conduite externe cylindrique 5a1-5b1 entourant de manière coaxiale une conduite interne cylindrique 5a2-5b2, la conduite externe 5a1-5b1 étant soudée de manière étanche en 8a à une pièce forgée, elle-même soudée de manière étanche en 8b à la conduite interne 5a2-5b2, pour constituer un volume 5a3 rempli de matériau isolant, de préférence sous pression réduite de gaz, par exemple tel que décrit dans FR 2 878 936. Les deux rames sont assemblées par soudage en 7, à bord de la tour de pose en J 21 installée à bord du navire de pose 20 tel qu'illustré sur la figure 7.

Les rames 5 ont une longueur d'environ 12, 24 ou 48m et présentent sur toute leur longueur, sauf aux extrémités, un niveau d'isolation extrême du fait de la présence d'un matériau isolant, de préférence associé à un tirage au vide poussé pour limiter les phénomènes de transmission de chaleur par convection. Par contre, au niveau des extrémités desdites rames raccordées entre elles, la liaison métallique massive entre les deux rames, met en contact direct le milieu ambiant, en général de l'eau à 3-5°C à très grande profondeur, et le pétrole à véhiculer, en général à une température de 40-45°C à 80-100°C, voire plus : - Il s'en suit alors un transfert thermique, donc une perte de chaleur du pétrole transporté, ce qui risque de provoquer des bouchons de paraffine ou le formation d'hydrates de gaz, si la température vient à baisser en dessous de 30-35°C en un point quelconque de la liaison fond-surface. Ainsi, on cherche à restituer localement au niveau de chacune des jonctions entre rames, un niveau d'isolation suffisant pour que le cheminement du pétrole entre les têtes de puits et la surface se fasse avec un minimum de perte de chaleur.

Ce problème de pont thermique est encore plus critique lors des arrêts de production car la colonne de pétrole brut est alors arrêtée et, si en longueur courante de rame la perte de chaleur reste faible, grâce au niveau d'isolation extrême du au principe de PiP, il n'en va pas de même au droit des raccordements entre rames en raison du pont thermique ainsi créé. En effet, une rame de PiP de longueur unitaire 48m présentant un niveau d'isolation en longueur courante, appelée U-value, inférieur à 1 W/m²/K, a sa valeur moyenne dégradée de 10-12% du fait du pont thermique existant à chacune des extrémités, lorsque lesdites extrémités ne sont pas isolées. Si la longueur unitaire est moitié, c'est à dire 24m, la dégradation due aux extrémités non isolées est doublée, c'est-à-dire 20-25%. De même pour des rames de longueur 12m, la dégradation atteint alors 40/50%, ce qui rend alors la technologie PiP peu intéressante en raison de la complexité et le coût important de sa fabrication.

L'installation de manchons d'isolation à chacun des raccordements apporte un gain significatif à l'isolation moyenne d'une rame, et les valeurs moyennes dégradées précédemment définies sont alors respectivement de l'ordre de 7-8% pour une rame de 48m, de 14-18% pour une rame de 24m et de 28-36% pour une rame de 12m.

Par contre, en cas d'arrêt de production, les performances seront les mêmes pour chacune des longueurs unitaires de rame, car alors le phénomène de refroidissement est principalement localisé au niveau des ponts thermiques, c'est à dire au niveau de chacun des raccordements entre rames, respectivement tous les 48-50m, tous les 24-25m, ou tous les 12m.

A titre d'exemple, une jonction non isolée crée, en cas d'arrêt de production, par exemple en cas d'incident à bord du FPSO, d'un PiP constitué d'une conduite interne de 300mm de diamètre et une conduite externe de 400mm, véhiculant du pétrole brut à 65°C, une chute de température de 48°C en 4-6 heures, alors que cette jonction isolée par un manchon injecté de gel isolant verra cette chute de température sur une durée supérieure à 24 heures. Si de plus une poche interne 22 décrite ci-après comportant un composé à changement de phase, tel un sel fondu, est ajoutée, alors la même chute de température ne sera atteinte qu'après 30 à 36 heures, ce qui limite ainsi radicalement les risques de formation de paraffine ou d'hydrate de gaz, et laisse ainsi plus de temps pour réparer et relancer la production.

Le manchon d'isolation selon l'invention, est installé à cheval sur chacune desdites jonctions de soudage 7 entre rames, ledit manchon présentant une épaisseur de matériau isolant dans ladite paroi creuse de 10 à 30 cm, et ledit manchon s'étendant de préférence de part et d'autre de ladite jonction sur une longueur supérieure à 1m, de préférence sur une longueur de 1.5m à 3m, c'est-à-dire le cas échéant par-dessus les conduites externes 1a au-delà des pièces de jonction 9a,9b ou soudure de fermeture par croquage 6a,6b décrite ci-après.

Sur la figure 6A on a représenté en coupe et en vue de côté l'assemblage de deux rames de type « croqué ». Chacune des rames est constituée d'une enveloppe externe tubulaire 5a1-5b1 entourant de manière coaxiale une conduite interne 5a2-5b2, l'enveloppe externe 5a1-5b1 étant « croquée » à chacune de ses extrémités et soudée de manière étanche en 6a,6b à la conduite interne 5a2-5b2, pour constituer un volume 5a3-5b3 rempli de matériau isolant, de préférence sous pression réduite de gaz. L'espace entre la conduite intérieure 5a4 non recouverte par la conduite externe et le manchon est avantageusement comblé par des poches étanches 20 contenant un composé à changement de phase ledit composé étant en particulier un sel fondu. Ladite poche est avantageusement cylindrique, constituée de deux poches 20a,20b de section demi circulaire disposées diamétralement opposées l'une contre l'autre, tel que représenté sur la coupe transversale de la figure 6B, de telle manière que la conduite est recouverte par deux poches identiques 20a 20b, les extrémités droite et gauche selon l'axe ZZ étant avantageusement profilées 20c pour s'ajuster au plus près de la conduite externe 1a dans la zone entre la conduite externe et la paroi interne du manchon au-delà des soudures de croquage 6a,6b. Ainsi, on procure un maximum de volume de poche, et donc de capacité calorifique.

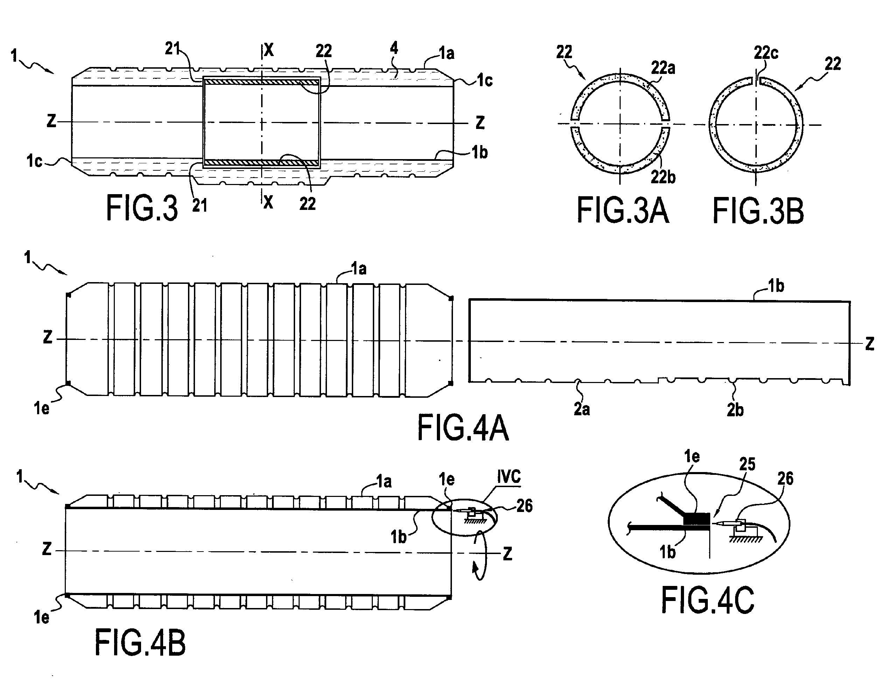

Dans une version préférée de l'invention représentée sur la figure 3, le manchon isolant 1 comporte en son milieu, et à l'intérieur de sa face interne 1b, un évidement 21 dans lequel on insère avantageusement une poche 22 contenant un dit matériau à changement de phase, dont l'épaisseur de 1 à 5cm est telle qu'une fois en place à l'intérieur du manchon isolant, son diamètre interne est légèrement supérieur au diamètre interne de la paroi interne 1b dudit manchon de part et d'autre de la zone creuse 21. Pour faciliter l'installation à l'intérieur dudit manchon isolant, on dispose avantageusement deux demi poches à section semi-circulaire 22a,22b disposées diamétralement opposées l'une contre l'autre, tel que représenté sur la figure 3A, ou encore une seule poche ouverte selon la génératrice 22c, telle que représentée sur la figure 3B, que l'on peut replier sur elle-même pour être plus facilement insérée dans le logement creux 21.

Dans une version préférée de l'invention, le manchon isolant est fabriqué en deux temps comme représenté sur les figures 4A, 4B et 4C. Dans un premier temps, on rotomoule de manière connue l'enveloppe externe 1a, ladite enveloppe externe comportant des extrémités 1c renforcées 1e, c'est-à-dire d'épaisseur supérieure à la partie courante, laquelle épaisseur est de 5-6 mm. Puis, on insère à l'intérieur de ladite enveloppe externe une enveloppe interne constituée d'un tube lisse 1b obtenu par exemple par extrusion continu puis coupé à longueur de manière à ce que la longueur dudit tube corresponde à la longueur de l'enveloppe externe 1a, comme représenté sur la figure 4A. Une fois l'insertion terminée, on solidarise 25 l'extrémité 1e de ladite enveloppe externe 1a et ledit tube interne 1b, par exemple, de manière connue, par soudage à l'air chaud 26, ou sous atmosphère de gaz neutre tel l'azote, de manière à rendre étanche la paroi creuse du manchon d'isolation en vue de son remplissage par un gel isolant 4.

Sur les figures 8A-8B, on a représenté en coupe et en vue de côté la phase d'installation d'un manchon au sein d'une tour de pose en J 21 d'un navire d'installation 20, au niveau de la jonction entre deux rames 5a-5b telles que définies en référence à la figure 5B. La conduite en suspension 5a est maintenue au sein de la tour de pose en J grâce à la collerette 30 située à la périphérie de la pièce forgée 9a. La rame 5b, sur laquelle on a préalablement installé le manchon 1 en position rétractée, c'est-à-dire en dégagement de la zone d'assemblage par soudage, est alors amenée en contact avec ladite conduite 5a en suspension, puis soudée par un dispositif de soudage orbital 31. Après contrôle et opérations de finitions, le manchon est descendu par coulissement axial selon ZZ' de marnière à chevaucher ladite soudure 7, de préférence à égale distance de ses extrémités. L'extrémité inférieure dudit manchon vient coopérer avec un joint, de préférence un joint torique 32 préinstallé sur la rame inférieure en suspension 5a. Ainsi, l'espace ou jeu 33 à l'intérieur du manchon, c'est-à-dire entre l'enveloppe interne du manchon et la ou lesdites poches 20,22 et l'ensemble de conduites coaxiales 5a,5b, peut être rempli d'un composé de remplissage collant 34 permettant de solidariser le manchon avec l'ensemble de conduites coaxiales, de préférence un matériau isolant quasi-incompressible, le remplissage se faisant à partir de l'extrémité supérieure dudit manchon. Le composé 34 peut être une résine polyuréthane, chargée ou non de microbille de verre pour constituer alors un complément d'isolation au manchon, ou un gel isolant, ou un gel aqueux, ou encore un gel comportant un matériau à changement de phase.

Sur la figure 5B, du fait que la rame 5a comporte une collerette 30, ledit manchon présente avantageusement, dans sa partie inférieure un diamètre interne 35a supérieur au diamètre interne 35b de la partie supérieure, ledit diamètre 35a étant légèrement supérieur au diamètre externe de ladite collerette 30. Ceci permet de minimiser la quantité de produit de remplissage dans la partie supérieure du manchon au-dessus de la collerette 30, et dans certains cas de minimiser les échanges thermiques avec l'extérieur.

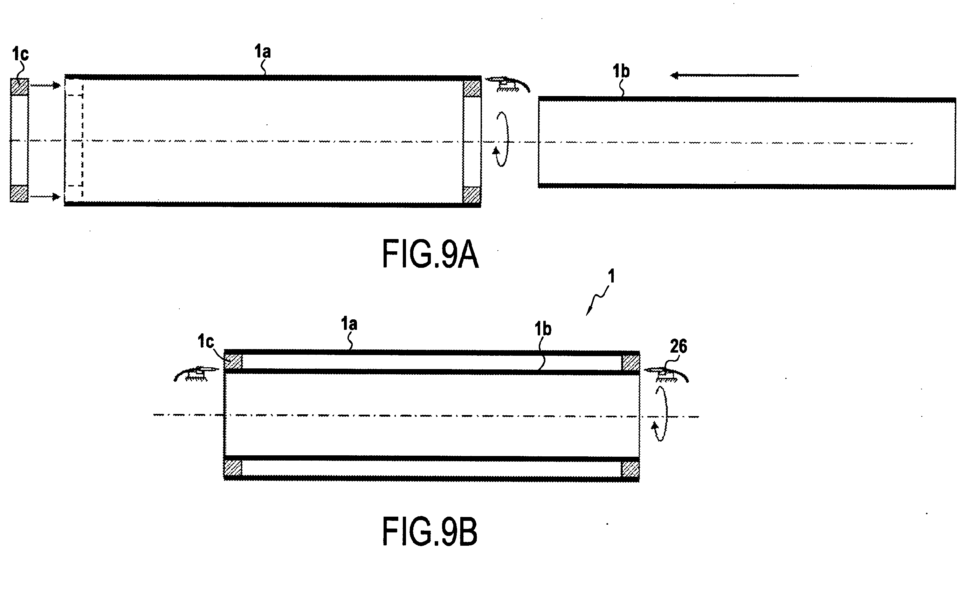

Sur les figures 9A et 9B, on a représenté une variante de réalisation dans laquelle les enveloppe externe 1a et enveloppe interne 1b du manchon sont de forme cylindrique rectiligne obtenues par extrusion toutes deux, par exemple en polyéthylène et dont les extrémités longitudinales sont reliées par soudage de collerettes annulaires insérées entre lesdites enveloppes interne 1b et externe 1a à leurs extrémités, et soudées à l'aide d'un outil 26 décrit précédemment.

Sur les figures 5A et 5B les deux rames 5a,5b comprennent chacune une pièce de jonction 9a, 9b assemblées entre elles. Chaque dite pièce de jonction 9a,9b est une pièce de jonction de révolution délimitée comme suit :
■ dans une direction radiale par rapport à un axe longitudinal XX' de révolution de ladite pièce, elle est délimitée par une paroi interne cylindrique sensiblement de même diamètre que celui de la partie courante de ladite conduite interne 5a₂,5b₂, et par une paroi externe cylindrique de diamètre sensiblement égal au diamètre externe de la partie courante de ladite conduite externe 5a₁-5b₁, et
■ dans la direction axiale longitudinale ZZ',
   - du côté de ladite pièce de jonction assemblée par soudage 8a à l'extrémité desdites conduites externe et interne d'un dit élément unitaire d'un ensemble d'au moins deux conduites coaxiales, lesdites parois externe et interne de ladite pièce de jonction forment en section longitudinale des premières branches respectivement externe 13₁ et interne 13₂ sensiblement de même épaisseur que lesdites conduites externe 5a₁ et interne 5b₁ auxquelles elles sont assemblées, lesdites premières branches externe 13₁ et interne 13₂ délimitant une première cavité annulaire 14, et
   - du côté opposé de ladite pièce de jonction assemblé à une autre dite pièce de jonction, elle-même assemblée par soudage 8a,8b à l'extrémité du dit autre élément unitaire d'ensemble de deux conduites coaxiales, lesdites parois externe et interne forment en section longitudinale des deuxièmes branches respectivement externe 15₁ et interne 15₂, délimitant une deuxième cavité annulaire 16,
   - les deux dites première et deuxième pièces de jonction étant soudées l'une à l'autre uniquement au niveau de l'extrémité desdites deuxièmes branches externes 15₁,
   - les extrémités desdites deux branches internes 15₂ non soudées butent en contact l'une avec l'autre, de sorte que lesdites deuxièmes cavités internes 16 ne sont pas étanches vis-à-vis de l'intérieur de ladite paroi interne et de ladite conduite interne, et
   - les fonds desdites première et deuxième cavités 14, 16 étant espacés dans ladite direction longitudinale ZZ', de manière à délimiter une zone pleine massive de ladite pièce de jonction dans laquelle lesdites parois externe et interne forment les faces externe et interne d'une même paroi cylindrique, les fond desdites première et deuxième cavités 14,16 étant espacés d'une longueur d'au moins 0,5 fois l'épaisseur maximale de la paroi de ladite pièce de jonction de ladite zone pleine, de préférence supérieure à ladite épaisseur maximale.

Lesdites deuxièmes cavités internes sont destinées à être remplies du même fluide que celui circulant au sein de la conduite interne.

La butée entre les extrémités libres des deuxièmes branches internes des deux pièces de jonction assemblées l'une à l'autre assurent une quasi continuité de la conduite interne et permet d'éviter des phénomènes de turbulence de type Vortex dans la circulation du fluide à l'intérieur de l'ensemble de conduites au niveau du raccordement des deux pièces de jonction.

D'autre part, le fait que deux pièces de jonction adjacentes soient soudées uniquement au niveau de l'extrémité desdites deuxième branches externes, permet que la totalité des phénomènes de transferts de charge et de contraintes soit localisée au niveau externe et n'implique pas lesdites parois internes, ce qui permet de mieux contrôler les risques de fissuration ou phénomènes de fatigue et d'éviter que le dispositif ne se ruine complètement au niveau de la paroi interne.

En outre, le fait que les deux extrémités desdites deuxièmes branches internes de deux pièces adjacentes selon l'invention, ne soient pas soudées entre elles, autorise des mouvements infimes desdites parois internes face à face dus à des éventuelles flexions ou variations de pression ou de température et autorise que lesdites parois internes puissent se déforment plastiquement et permettre un matage desdites deuxièmes branches internes sans risquer de transférer des charges de compression de contact, ce qui permet d'éviter de perturber la répartition des contraintes dans la zone d'assemblage et que l'essentiel des contraintes soit repris au niveau des parois externes desdites pièces.

Enfin, la zone pleine massive entre les fonds desdites première et deuxième cavités permet de transférer les efforts de compression ou de traction entre les conduites interne et externe.

Toutes ces caractéristiques contribuent à améliorer radicalement le comportement en flexion, ainsi qu'en fatigue, d'un dispositif impliquant deux éléments d'ensemble coaxial équipé de dites pièces de jonction et raccordées l'une à l'autre, à bord des navires d'installation.

## Revendications

1. Ensemble de deux conduites coaxiales de type PiP, comprenant au moins deux éléments unitaires de conduites coaxiales (5a,5b) comprenant chacun une conduite interne (5a₂,5b₂) et une conduite externe (5a₁,5b₁) avec un espace annulaire (5a₃,5b₃), de préférence rempli d'un matériau isolant, assemblés bout à bout par soudage, **caractérisé en ce qu'**il comprend un manchon (1) à paroi tubulaire creuse en matériau rigide ou semi-rigide, de préférence en matière plastique ou matériau composite, entourant ladite conduite au regard de la zone de jonction par soudage (7) des deux dits éléments unitaires de conduites coaxiales (5a,5b), ladite paroi tubulaire creuse du manchon comprenant une enveloppe externe (1a) et une enveloppe interne (1b) reliées à leurs extrémités longitudinales (1c) de façon étanche, définissant ainsi un volume interne entièrement rempli d'un matériau isolant thermique quasi-incompressible, consistant en un gel isolant.

2. Ensemble de deux conduites coaxiales de type PiP selon la revendication 1, **caractérisé en ce que** ledit matériau isolant thermique quasi incompressible est un gel isolant, à changement de phase (PCM).

3. Ensemble de conduites coaxiales selon la revendication 1 ou 2, **caractérisé en ce qu'**au moins ladite enveloppe interne ou de préférence au moins ladite enveloppe externe (1a,1b) dudit manchon forme une pièce d'un seul tenant avec des éléments de liaison (1c) à ses extrémités longitudinales, aptes à fermer l'espace entre les enveloppes interne et externe de la paroi tubulaire creuse du manchon à leurs extrémités, ladite pièce (1a-1c) étant en matière thermoplastique de faible épaisseur, inférieure à 10 mm, de préférence d'épaisseur d'environ 4 à 8 mm, obtenue par rotomoulage et ladite pièce (1a-1c) est fixée à l'autre enveloppe externe ou respectivement interne de la paroi tubulaire creuse du manchon au niveau desdits éléments de liaison (1c).

4. Ensemble d'éléments de conduites coaxiales selon la revendication 3, **caractérisé en ce que** ladite pièce (1a,1c) obtenue par rotomoulage comprenant une dite enveloppe interne ou de préférence externe du manchon avec lesdits éléments de liaison d'extrémité (1c) comporte au niveau de ladite enveloppe interne ou de préférence enveloppe externe du manchon des ondulations ou des rainures (2) en bosse (2a) ou en creux (2b) arrondies ou crantées.

5. Ensemble de conduites coaxiales selon l'une des revendications 3 ou 4, **caractérisé en ce que** l'une desdites enveloppes interne ou externe dudit manchon qui vient de matière avec lesdits éléments de liaison (1c) d'extrémité est obtenu par rotomoulage, l'autre enveloppe externe ou respectivement interne du manchon étant obtenue par extrusion ou par rotomoulage, et étant fixée par collage ou soudage aux dits éléments de liaison (1c).

6. Ensemble de conduites coaxiales selon l'une des revendications 1 à 4, **caractérisé en ce que** ladite paroi tubulaire creuse comprenant lesdites enveloppes interne et externe (1a,1b) et dits éléments de liaison (1c) d'extrémité, est obtenue d'un seul tenant sous forme de pièce monobloc par rotomoulage, l'enveloppe interne présentant de préférence une forme légèrement conique (3c) et dépourvue de dites ondulations ou rainures, de façon à permettre son démoulage.

7. Ensemble de conduites coaxiales selon l'une des revendications 1 à 6, **caractérisé en ce que** ladite enveloppe interne (1b) de ladite paroi tubulaire creuse du manchon (1) comporte une zone médiane de plus grand diamètre que les zones d'extrémité qui lui sont adjacentes de part et d'autre, formant ainsi un creux (21) dans lequel est logée au moins une première poche étanche (22) entourant ledit ensemble de conduites coaxiales sur toute sa périphérie, remplie d'un matériau à changement de phases non isolant, de préférence un sel fondu, l'épaisseur de ladite poche ainsi remplie étant de préférence inférieure à l'épaisseur dudit creux, de préférence encore de 1 à 10 cm.

8. Ensemble de conduites coaxiales selon la revendication 7, **caractérisé en ce que** ladite enveloppe externe (1a) de la paroi tubulaire du manchon comprend une partie médiane (23) de plus grand diamètre que les zones d'extrémité qui lui sont adjacentes, au regard de ladite zone médiane (21) de plus grand diamètre de ladite enveloppe interne, de façon à maintenir une épaisseur de matériau isolant quasi incompressible à l'intérieur de l'enveloppe dans ladite zone médiane (23), sensiblement constante sur toute la longueur dudit manchon.

9. Ensemble d'éléments de conduites coaxiales selon l'une des revendications 1 à 8, **caractérisé en ce que** ledit manchon comprend en outre un matériau de remplissage (33), remplissant l'espace ou le jeu entre ladite enveloppe interne (1b) de la paroi tubulaire du manchon et ladite conduite externe ou le cas échéant conduite interne de l'ensemble de conduites coaxiales, ledit matériau de remplissage assurant la liaison dudit manchon sur l'ensemble de conduites coaxiales, de préférence un matériau de remplissage durcissable du type résine ou ciment, de préférence encore un matériau isolant thermique.

10. Ensemble de conduites coaxiales selon l'une des revendications 1 à 9, **caractérisé en ce que** chacun desdits éléments unitaires d'ensemble de conduites coaxiales (5a,5b) assemblées comprennent à leur extrémité une pièce de jonction de révolution (9a,9b) raccordée auxdites conduites interne et externe à une extrémité de la pièce de jonction de révolution et les deux pièces de jonction de révolution étant assemblées par soudage l'une à l'autre à leur autre extrémité, ledit manchon étant centré au droit de la soudure de jonction (7) entre les deux pièces de jonction de révolution (9a,9b) et s'étendant au-delà des soudures de raccordement (8a) entre lesdites pièces de jonction et chacun desdits éléments unitaires d'ensemble desdites conduites coaxiales.

11. Ensemble de conduites coaxiales selon l'une des revendications 1 à 10, **caractérisé en ce que** chaque dit élément unitaire de conduites coaxiales (5a,5b) comprend une extrémité de conduite externe en retrait par rapport à l'extrémité de conduite interne, l'espace annulaire (5a₃,5b₃) entre lesdites conduites externe et interne étant fermé par croquage (6a,6b), consistant en la déformation de la partie terminale de la conduite externe dont l'extrémité est directement raccordée à la surface de la conduite interne (5a₂,5b₂), de préférence par soudage, et les deux éléments unitaires de conduites coaxiales sont assemblées par soudage (7) l'un à l'autre au niveau des extrémités de leurs conduites internes, ledit manchon (1) s'étendant sur une distance d'au moins 50 cm de préférence au moins 1 m, au-dessus desdites conduites externes (5a₁,5b₁), au-delà des soudures de croquage (6a,6b), et l'espace entre l'enveloppe interne dudit manchon et la conduite interne de l'ensemble des conduites coaxiales entre les deux soudures de croquage (6a,6b) est remplie d'un matériau isolant, de préférence un composé à changement de phase, de préférence encore un sel fondu contenu dans au moins une deuxième poche étanche (20) entourant complètement ladite conduite interne, l'extrémité longitudinale desdites poches présentant de préférence en coupe longitudinale axiale un profil biseauté (20c) de manière à s'ajuster au plus près de ladite conduite externe après la zone de croquage (6a,6b) entre ladite conduite externe (5a₁,5b₁) et ladite enveloppe interne (1b) dudit manchon.

12. Ensemble de conduites coaxiales selon l'une des revendications 1 à 11, **caractérisé en ce que** chaque dit élément unitaire de conduites coaxiales comprend à son extrémité une dite pièce de jonction (9a,9b), les deux dites pièces de jonction étant raccordées par soudage (7) entre elles, et l'une desdites pièces de jonction comprenant sur sa surface externe, une protubérance en forme de butée ou collerette (30) apte à permettre la retenue en suspension de l'élément de conduite unitaire de conduites coaxiales qui lui est raccordé lorsque celui-ci est en position verticale ou inclinée, à partir d'un navire (21) de pose en mer, et ledit manchon tubulaire comprend une zone d'extrémité avec une enveloppe interne de diamètre (35a) supérieur à celui (35b) de l'extrémité opposée dans la direction longitudinale, ladite zone d'extrémité de l'enveloppe interne de plus grand diamètre (35a) recouvrant l'ensemble de conduites coaxiales à l'intérieur dudit manchon au moins depuis ladite protubérance ou collerette (30).

13. Ensemble de conduites coaxiales selon l'une des revendications 7 ou 11, **caractérisé en ce que** ledit manchon renferme desdites première et/ou deuxième poches formant deux poches semi-cylindriques (22a,22b et 20a,20b) diamétralement opposées de part et d'autre dudit ensemble de conduites coaxiales.

14. Ensemble de conduites coaxiales selon l'une des revendications 1 à 13, **caractérisé en ce que** la longueur dudit manchon est de 1 à 10 m, de préférence de 2 à 6m, de préférence de 5 à 25 cm d'épaisseur, de préférence encore lesdites enveloppes interne (1b) et externe (1a) de la paroi tubulaire du manchon (1) présentant une épaisseur de 2 à 10 mm.

## Patentansprüche

1. Anordnung von zwei koaxialen Rohrleitungen vom Typ PiP, umfassend wenigstens zwei Einzelelemente von koaxialen Rohrleitungen (5a, 5b), die jeweils eine Innenrohrleitung (5a₂, 5b₂) und eine Außenrohrleitung (5a₁, 5b₁) mit einem vorzugsweise mit einem Isoliermaterial gefüllten ringförmigen Raum (5a₃, 5b₃) umfassen, die stumpf aneinander geschweißt sind, **dadurch gekennzeichnet, dass** sie eine Muffe (1) mit hohler rohrförmiger Wand aus starrem oder halbstarrem Material, vorzugsweise aus Kunststoff oder Verbundwerkstoff umfasst, welche die Rohrleitung gegenüber dem Schweißverbindungsbereich (7) der beiden Einzelelemente von koaxialen Rohrleitungen (5a, 5b) umschließt, wobei die hohle rohrförmige Wand der Muffe einen Außenmantel (1a) und einen Innenmantel (1 b) umfasst, die an ihren Längsenden (1c) dicht verbunden sind, wodurch ein Innenraum definiert wird, der vollständig mit einem quasi nicht zusammendrückbaren, aus einem Isoliergel bestehenden Wärmeisoliermaterial gefüllt ist.

2. Anordnung von zwei koaxialen Rohrleitungen vom Typ PiP nach Anspruch 1, **dadurch gekennzeichnet, dass** das quasi nicht zusammendrückbare Wärmeisoliermaterial ein Isoliergel mit Phasenwechsel (PCM) ist.

3. Anordnung von koaxialen Rohrleitungen nach Anspruch 1 oder 2, **dadurch gekennzeichnet, dass** wenigstens der Innenmantel oder vorzugsweise wenigstens der Außenmantel (1 a, 1 b) der Muffe ein einstückiges Teil mit Verbindungselementen (1 c) an seinen Längsenden bildet, die geeignet sind, den Raum zwischen dem Innen- und dem Außenmantel der hohlen rohrförmigen Wand der Muffe an ihren Enden zu verschließen, wobei das Teil (1a-1c) aus thermoplastischem Material mit geringer Dicke, weniger als 10 mm, vorzugsweise mit einer Dicke von etwa 4 bis 8 mm besteht, das durch Rotationsformen erhalten wird, und das Teil (1 a-1 c) an dem anderen Mantel, äußeren bzw. inneren, der hohlen rohrförmigen Wand der Muffe im Bereich der Verbindungselemente (1 c) befestigt ist.

4. Anordnung von koaxialen Rohrleitungselementen nach Anspruch 3, **dadurch gekennzeichnet, dass** das durch Rotationsformen erhaltene Teil (1a, 1 c), welches einen Innen- oder vorzugsweise Außenmantel der Muffe mit den endseitigen Verbindungselementen (1 c) umfasst, im Bereich des Innenmantels oder vorzugsweise Außenmantels der Muffe Wellen oder Nuten (2), erhaben (2b) oder vertieft (2a), abgerundet oder gezackt, umfasst.

5. Anordnung von koaxialen Rohrleitungen nach einem der Ansprüche 3 oder 4, **dadurch gekennzeichnet, dass** einer der Innen- und Außenmäntel der Muffe, der mit den endseitigen Verbindungselementen (1c) aus einem Stück gebildet ist, durch Rotationsformen erhalten wird, wobei der andere Mantel, äußere bzw. innere, der Muffe durch Extrudieren oder durch Rotationsformen erhalten wird und an den Verbindungselementen (1 c) festgeklebt oder festgeschweißt ist.

6. Anordnung von koaxialen Rohrleitungen nach einem der Ansprüche 1 bis 4, **dadurch gekennzeichnet, dass** die hohle rohrförmige Wand, die den Innen- und den Außenmantel (1a, 1b) und endseitige Verbindungselemente (1c) umfasst, aus einem Stück in Form eines Einblockteils durch Rotationsformen erhalten wird, wobei der Innenmantel vorzugsweise ein leicht konische Form (3c) ohne Wellen oder Nuten aufweist, um sein Ausformen zu ermöglichen.

7. Anordnung von koaxialen Rohrleitungen nach einem der Ansprüche 1 bis 6, **dadurch gekennzeichnet, dass** der Innenmantel (1 b) der hohlen rohrförmigen Wand der Muffe (1) einen Mittelbereich mit größerem Durchmesser als die beidseitig an ihn angrenzenden Endbereiche umfasst, wodurch ein Hohlraum (21) gebildet wird, in dem wenigstens eine die Anordnung von koaxialen Rohrleitungen über ihren gesamten Umfang umschließende erste dichte Tasche (22), welche mit einem nicht isolierenden Phasenwechselmaterial, vorzugsweise einem geschmolzenen Salz gefüllt ist, aufgenommen ist, wobei die Dicke der so gefüllten Tasche vorzugsweise geringer als die Dicke des Hohlraums ist, weiterhin vorzugsweise 1 bis 10 cm beträgt.

8. Anordnung von koaxialen Rohrleitungen nach Anspruch 7, **dadurch gekennzeichnet, dass** der Außenmantel (1a) der rohrförmigen Wand der Muffe einen Mittelteil (23) mit größerem Durchmesser als die an ihn angrenzenden Endbereiche, gegenüber dem Mittelbereich (21) mit größerem Durchmesser des Innenmantels umfasst, um eine Dicke von quasi nicht zusammendrückbarem Isoliermaterial innerhalb des Mantels in dem Mittelbereich (23) aufrechtzuerhalten, die über die gesamte Länge der Muffe im Wesentlichen konstant ist.

9. Anordnung von koaxialen Rohrleitungselementen nach einem der Ansprüche 1 bis 8, **dadurch gekennzeichnet, dass** die Muffe ferner ein Füllmaterial (33) umfasst, das den Raum oder das Spiel zwischen dem Innenmantel (1 b) der rohrförmigen Wand der Muffe und der Außenrohrleitung oder gegebenenfalls Innenrohrleitung der Anordnung von koaxialen Rohrleitungen ausfüllt, wobei das Füllmaterial die Verbindung der Muffe an der Anordnung von koaxialen Rohrleitungen sicherstellt, vorzugsweise ein härtbares Füllmaterial vom Typ Harz oder Zement, weiterhin vorzugsweise ein Wärmeisoliermaterial.

10. Anordnung von koaxialen Rohrleitungen nach einem der Ansprüche 1 bis 9, **dadurch gekennzeichnet, dass** ein jedes der Einzelelemente der Anordnung von verbundenen koaxialen Rohrleitungen (5a, 5b) an ihrem Ende ein Rotationsverbindungsteil (9a, 9b) umfassen, das an die Innen- und die Außenrohrleitung an einem Ende des Rotationsverbindungsteils angeschlossen ist, und wobei die beiden Rotationsverbindungsteile an ihrem anderen Ende aneinander geschweißt sind, wobei die Muffe direkt über der Verbindungsschweißnaht (7) zwischen den beiden Rotationsverbindungsteilen (9a, 9b) zentriert ist und sich über die Verbindungsschweißnähte (8a) zwischen den Verbindungsteilen und jedem der Einzelelemente der Anordnung der koaxialen Rohrleitungen hinaus erstreckt.

11. Anordnung von koaxialen Rohrleitungen nach einem der Ansprüche 1 bis 10, **dadurch gekennzeichnet, dass** jedes Einzelelement von koaxialen Rohrleitungen (5a, 5b) ein Außenrohrleitungsende, welches gegenüber dem Innenrohrleitungsende zurückspringt, umfasst, wobei der ringförmige Raum (5a₃, 5b₃) zwischen der Außen-und der Innenrohrleitung durch Knicken (6a, 6b) verschlossen ist, das in dem Verformen des Endteils der Außenrohrleitung besteht, deren Ende direkt mit der Oberfläche der Innenrohrleitung (5a₂, 5b₂), vorzugsweise durch Schweißen, verbunden ist, und die beiden Einzelelemente von koaxialen Rohrleitungen im Bereich der Enden ihrer Innenrohrleitungen aneinander geschweißt (7) sind, wobei die Muffe (1) sich über eine Strecke von wenigstens 50 cm, vorzugsweise wenigstens 1 m, oberhalb der Außenrohrleitungen (5a₁, 5b₁), über die Knickschweißnähte (6a, 6b) hinaus erstreckt, und der Raum zwischen dem Innenmantel der Muffe und der Innenrohrleitung der Anordnung der koaxialen Rohrleitungen zwischen den beiden Knickschweißnähten (6a, 6b) mit einem Isoliermaterial, vorzugsweise einer Phasenwechselverbindung, weiterhin vorzugsweise einem geschmolzenen Salz gefüllt ist, das in wenigstens einer zweiten dichten Tasche (20), welche die Innenrohrleitung vollständig umschließt, enthalten ist, wobei das Längsende der Taschen vorzugsweise im axialen Längsschnitt ein abgeschrägtes Profil (20c) aufweist, um sich der Außenrohrleitung nach dem Knickbereich (6a, 6b) zwischen der Außenrohrleitung (5a₁, 5b₁) und dem Innenmantel (1b) der Muffe möglichst nahe anzupassen.

12. Anordnung von koaxialen Rohrleitungen nach einem der Ansprüche 1 bis 11, **dadurch gekennzeichnet, dass** jedes Einzelelement von koaxialen Rohrleitungen an seinem Ende ein Verbindungsteil (9a, 9b) umfasst, wobei die beiden Verbindungsteile untereinander verschweißt (7) sind und wobei eines der Verbindungsteile an seiner Außenfläche einen anschlagförmigen Vorsprung oder Kragen (30) umfasst, der geeignet ist, zu ermöglichen, das Einzelrohrleitungselement von koaxialen Rohrleitungen, das mit ihm verbunden ist, von einem Schiff (21) zum Verlegen im Meer aus aufgehängt zu halten, wenn es sich in vertikaler oder geneigter Position befindet, und die rohrförmige Muffe einen Endbereich mit einem Innenmantel umfasst, dessen Durchmesser (35a) größer als der (35b) des gegenüberliegenden Endes in der Längsrichtung ist, wobei der Endbereich des Innenmantels mit größerem Durchmesser (35a) die Anordnung von koaxialen Rohrleitungen innerhalb der Muffe wenigstens von dem Vorsprung oder Kragen (30) aus bedeckt.

13. Anordnung von koaxialen Rohrleitungen nach einem der Ansprüche 7 oder 11, **dadurch gekennzeichnet, dass** die Muffe eine erste und/oder eine zweite Tasche enthält, die zwei auf beiden Seiten der Anordnung von koaxialen Rohrleitungen diametral gegenüberliegende halbzylindrische Taschen (22a, 22b und 20a, 20b) bilden.

14. Anordnung von koaxialen Rohrleitungen nach einem der Ansprüche 1 bis 13, **dadurch gekennzeichnet, dass** die Länge der Muffe 1 bis 10 m, vorzugsweise 2 bis 6 m, vorzugsweise mit einer Dicke von 5 bis 25 cm, beträgt, wobei weiterhin vorzugsweise der Innenmantel (1 b) und der Außenmantel (1a) der rohrförmigen Wand der Muffe (1) eine Dicke von 2 bis 10 mm aufweisen.

## Claims

1. An assembly of two coaxial pipes of the PiP type, comprising at least two coaxial pipe unit elements (5a, 5b) each comprising an inner pipe (5a2, 5b2) and an outer pipe (5a1, 5bl), with an annular space (5a3, 5b3), preferably filled with an insulating material, and assembled end to end by welding, the assembly being **characterized in that** it includes a sleeve (1) with a hollow tubular wall made of rigid or semirigid material, preferably of plastics material or composite material, surrounding said pipe in register with the welded junction zone (7) between said two coaxial pipe unit elements (5a, 5b), said hollow tubular wall of the sleeve comprising an outer casing (1a) and an inner casing (1b) connected together at their longitudinal ends (1c) in leaktight manner, thereby defining an internal volume that is completely filled with a quasi-incompressible thermally insulating material that constitutes an insulating gel.

2. An assembly of two coaxial pipes of the PiP type according to claim 1, **characterized in that** said quasi-incompressible thermally insulating material is an insulating gel of PCM.

3. A coaxial pipe assembly according to claim 1 or claim 2, **characterized in that** at least said inner casing or preferably at least said outer casing (1a, 1b) of said sleeve is formed as a single piece with connection elements (1c) at its longitudinal ends, suitable for closing the space between the inner and outer casings of the hollow tubular wall of the sleeve at their ends, said single piece (1a-1c) being made of thermostatic material of small thickness, less than 10 mm, preferably of thickness lying in the range about 4 mm to about 8 mm, being obtained by rotational molding, and said single piece (1a-1c) being fastened to the other casing, respectively the outer or the inner casing, of the hollow tubular wall of the sleeve via said connection elements (1c).

4. An assembly of coaxial pipe elements according to claim 3, **characterized in that** said single piece (1a, 1c) obtained by rotational molding comprises a said inner or preferably outer casing of the sleeve together with said end connection elements (1c), and includes corrugations or grooves (2) forming rounded or square projections (2a) or recesses (2b) in said inner casing or preferably in said outer casing of the sleeve.

5. A coaxial pipe assembly according to claim 3 or claim 4, **characterized in that** one of said inner or outer casings of said sleeve that is made integrally with said end connection elements (1c) is obtained by rotational molding, while the other casing of the sleeve, respectively the outer or the inner casing, is obtained by extrusion or by rotational molding, and is fastened to said connection elements (1c) by adhesive or by heat-sealing.

6. A coaxial pipe assembly according to any one of claims 1 to 4, **characterized in that** said hollow tubular wall comprising said inner and outer casings (1a, 1b) and said end connection elements (1c) is obtained as a said single piece in the form of a one-piece by rotational molding, the inner casing preferably presenting a shape (3c) that is slightly conical, without said corrugations or grooves, so as to enable it to be unmolded.

7. A coaxial pipe assembly according to any one of claims 1 to 6, **characterized in that** said inner casing (1b) of said hollow tubular wall of the sleeve (1) includes a middle zone of diameter greater than the end zones adjacent thereto on either side thereof, thus forming a setback (21) in which at least one first leaktight pouch (22) is received surrounding the entire periphery of said coaxial pipe assembly, the pouch being filled with a non-insulating phase-change material, preferably a molten salt, the thickness of said filled pouch preferably being less than the thickness of said setback, more preferably lying in the range 1 cm to 10 cm.

8. A coaxial pipe assembly according to claim 7, **characterized in that** said outer casing (1a) of the tubular wall of the sleeve includes a middle portion (23) of diameter greater than the end zones adjacent thereto, in register with said greater diameter middle zone (21) of said inner casing, so as to maintain a substantially constant thickness of quasi-incompressible insulating material within the casing in said middle zone (23) over the entire length of said sleeve.

9. An assembly of coaxial pipe elements according to any one of claims 1 to 8, **characterized in that** said sleeve further includes a filler material (33) filling the space or clearance between said inner casing (1b) of the tubular wall of the sleeve and said outer pipe or where appropriate inner pipe of the coaxial pipe assembly, said filler material connecting said sleeve to said coaxial pipe assembly, and preferably being a hardenable filler material of the resin or cement type, more preferably being a thermally insulating material.

10. A coaxial pipe invention according to any one of claims 1 to 9, **characterized in that** each of said unit elements of the assembled coaxial pipe assembly (5a, 5b) includes at its ends a junction piece (9a, 9b) forming a body of revolution connected to said inner and outer pipes at one end of the junction piece, with the two junction pieces being assembled to each other by welding at their opposite ends, said sleeve being centered over the weld (7) joining the two junction pieces (9a, 9b) together and extending beyond the connection welds (8a) between said junction pieces and each of said coaxial pipe assembly unit elements.

11. A coaxial pipe assembly according to any one of claims 1 to 10, **characterized in that** each said coaxial pipe unit element (5a, 5b) includes an outer pipe end that is set back from the end of the inner pipe, the annular space (5a3, 5b3) between said outer and inner pipes being closed by crimping (6a, 6b), which consists in deforming the terminal portion of the outer pipe so that its end is directly connected to the surface of the inner pipe (5a2, 5b2), preferably by welding, and the two coaxial pipe unit elements are assembled together by welding (7) to each other via the ends of their inner pipes, said sleeve (1) extending over a distance of at least 50 cm and preferably at least 1 m over said outer pipe (5a1, 5b1) beyond the crimp welds (6a, 6b), and the space between the inner casing of said sleeve and the inner pipe of the coaxial pipe assembly between the two crimp welds (6a, 6b) is filled with an insulating material, preferably a phase-change compound, more preferably a molten salt contained in at least one second leaktight pouch (20) completely surrounding said inner pipe, the longitudinal end(s) of said pouch(es) preferably presenting in axial longitudinal section a profile (20c) that is chamfered in such a manner as to fit as closely as possible to said outer pipe after the crimp zone (6a, 6b) between said outer pipe (5a1, 5b2) and said inner casing (1b) of said sleeve.

12. A coaxial pipe assembly according to any one of claims 1 to 11, **characterized in that** each said coaxial pipe unit element includes at its end a said junction piece (9a, 9b), said two junction pieces being connected together by welding (7), and one of said junction pieces including in its outside surface a projection in the form of an abutment or a collar (30) suitable for enabling the coaxial pipe unit element that is connected thereto to be held in suspension in a vertical or an inclined position from a laying ship (21) at sea, and said tubular sleeve includes an end zone with an inner casing of diameter (35a) greater than the diameter (35b) of the longitudinally opposite end, said greater-diameter end zone (35a) of the inner casing covering the coaxial pipe assembly inside said sleeve, at least starting from said projection or collar (30).

13. A coaxial pipe assembly according to claim 7 or claim 11, **characterized in that** said sleeve contains said first and/or second pouches forming pairs of diametrically opposite semicylindrical pouches (22a, 22b and 20a, 20b) on either side of said coaxial pipe assembly.

14. A coaxial pipe assembly according to any one of claims 1 to 13, **characterized in that** the length of said sleeve lies in the range 1 m to 10 m, preferably in the range 2 m to 6 m, and is of thickness preferably lying in the range 5 cm to 25 cm, and more preferably said inner and outer casings (1b and 1a) of the tubular wall of the sleeve (1) present thickness lying in the range 2 mm to 10 mm.
